# EUROPEAN PATENT SPECIFICATION

(11) **EP 1 862 919 B1**
(45) Date of publication and mention of the grant of the patent: **08.03.2017**
(21) Application number: 07106667.4
(22) Date of filing: 20.04.2007
(51) Int. Cl.: G06F 17/30, H04L 29/08

(54) **Method and apparatus for synchronizing device providing content directory service with device not providing content directory service**
Verfahren und Vorrichtung zur Synchronisierung eines Gerätes, das einen Content-Directory-Dienst bereitstellt, mit einem Gerät, das keinen Content-Directory-Dienst bereitstellt
Procédé et appareil pour synchroniser un dispositif fournissant un service de directoire de contenu avec un dispositif ne fournissant pas de service de directoire de contenu

(30) Priority: 14.11.2006 KR 20060112445; 03.05.2006 US 796892 P
(43) Date of publication of application: 05.12.2007
(73) Proprietor: Samsung Electronics Co., Ltd., Suwon-si, Gyeonggi-do, 443-742 (KR)
(72) Inventor: Han, Se-hee, Seongbuk-gu, Seoul (KR); Lee, Joo-yeol, Sencho-gu, Seoul (KR); Oh, Seung-jae, Gangnam-gu, Seoul (KR); Jung, Dong-shin, Suwon-si, Gyeonggi-do (KR); Kwon, Won-seok 1006-1503 Bangjuk Maeul Yeongtong Dranche Apt, Gyeonggi-do (KR)
(74) Representative: Grootscholten, Johannes A.M.

(56) References cited:
- EP-A- 1 710 979
- WO-A-2005/079071

## Description

Methods and apparatuses consistent with the present invention relate to synchronizing home network devices, and more particularly but not exclusively, to synchronizing contents contained in devices in a Universal Plug and Play (UPnP) network.

Universal Plug and Play (UPnP), which is a protocol for sensing and controlling electrical appliances connected to a network, is a home networking standard. A UPnP AV (Audio/Video) architecture was developed for utilizing multimedia content, such as audio/video, etc., on the basis of the UPnP standard.

The UPnP AV architecture, which is e.g. disclosed in WO 2005/07907 A1, consists of a media server, a media renderer, and a control point for controlling the media server and the media renderer. The media server provides multimedia files through a content directory service, and the media renderer reproduces the multimedia files. The control point controls the media server and the media renderer so that they can operate by interacting with each other. The content directory service provides metadata regarding contents used both inside and outside of a home network. The control point acquires information regarding content by means of the content directory service, and sends requests to the media renderer to reproduce the content.

If such a UPnP AV architecture is established, a plurality of media servers can exist in a home network, wherein the media servers can contain different content. In a UPnP AV environment, a user may want to easily synchronize content distributed to different content directory services (CDSs); for example, a user may want to synchronize an MP3 player with a home media center in order to be able to listen to music content stored on the MP3 player through a high-quality home Hi-Fi apparatus.

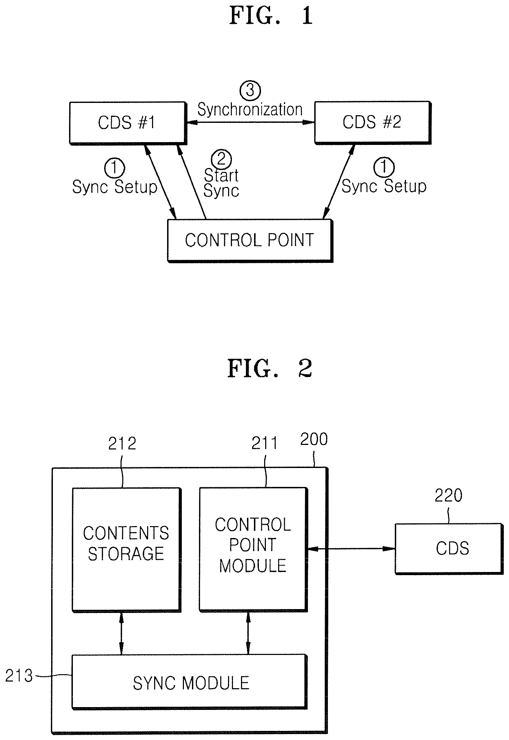

FIG. 1 is a view for explaining a conventional method of synchronizing content directory service devices providing control directory services. Referring to FIG. 1, a case is depicted wherein a user wants to synchronize control directory services between a first device CDS#1, and a second device CDS#2, by manipulation of a control point. Synchronizing the control directory services means synchronizing Digital Item Declaration Language Lite (DIDL-Lite) metadata for a plurality of directories that are to be synchronized. For example, if a directory A of the first device CDS #1 is synchronized with a directory B of the second device CDS #2, the control point will receive response messages when the control point browses the two directories A and B.

In order to synchronize two devices providing control directory services, the control point first performs synchronization setup. The synchronization setup refers to a process of providing a synchronization document to the two devices. The synchronization document for synchronizing the two devices providing the control directory services may include information regarding identifiers of devices and directories that are to be synchronized, a synchronization policy, etc.

If the synchronization setup is complete, the control point requests synchronization of the first device CDS #1 on the basis of the synchronization document in which synchronization between the first device CDS#1, and the second device CDS #2, is defined. Accordingly, the first device CDS#1, and the second device CDS #2, exchange information to be updated from their content lists, and then perform synchronization.

In the synchronization process, since a synchronization setup request, a synchronization request, the exchange of update information required for synchronization, etc., can be performed by an action provided by the control directory services, the first and second devices CDS #1 and CDS #2 which provide the control directory services can be relatively easily synchronized. However, since the control point includes a local reproducer and a storage device, when a user tries to reproduce and store content by using the control point, a problem exists in that the control point and a different device providing a control directory service cannot be synchronized. This is because the control point cannot provide the action for performing synchronization required by a different device when the control point provides no content directory service. For example, a different device cannot browse a list of content included in the control point, and also cannot request update information required to perform synchronization with the control point. Embodiments of the present invention aim to provide a method and apparatus for synchronizing a control point providing no content directory service with a different device providing a content directory service.

According to an aspect of the present invention, there is provided a synchronization method for synchronizing a first device providing no content directory service with a second device providing a content directory service, the method including: converting information regarding a content object that is to be synchronized with the second device, among content objects of the first device, into information with a predetermined format recognizable by the content directory service; generating a synchronization document used for synchronizing content directory services, using the converted information; and providing the synchronization document to the second device.

The synchronization method preferably includes: transmitting update information regarding content objects of the first device designated as objects that are to be synchronized in the synchronization document and a message for requesting synchronization in accordance with the synchronization document, to the second device; requesting the second device for update information regarding content objects of the second device designated as objects that are to be synchronized in the synchronization document; updating the content objects of the first device designated as the objects that are to be synchronized in the synchronization document, on the basis of the update information received from the second device, as a response to the request.

The synchronization document preferably includes an identifier that can be used for specifying an object that is to be synchronized, from among the content objects of the first device and the second device, and information regarding a synchronization policy.

In the transmitting of the update information, preferably the message for requesting the synchronization includes the update information of the first device or information indicating a location of the update information of the first device, such as a Uniform Resource Identifier (URI).

The message for requesting the synchronization preferably includes information indicating that the message is transmitted from a device providing no content directory service.

According to another aspect, there is provided a computer-readable recording medium having embodied thereon a computer program for executing the method according to the preceding aspect.

According to another aspect of the present invention, there is provided a synchronization apparatus for synchronizing a first device providing no content directory service with a second device providing a content directory service, the synchronization apparatus including: an information conversion unit converting information regarding a content object that is to be synchronized with the second device, among content objects of the first device, into information with a predetermined format recognizable by the content directory service; a synchronization document generator generating a synchronization document used for synchronizing content directory services, using the information with the predetermined format; and a synchronization document providing unit providing the synchronization document to the second device.

The synchronization apparatus preferably further including a synchronization performing unit transmitting and update information regarding content objects of the first device designated as objects that are to be synchronized in the synchronization document and a message for requesting synchronization in accordance with the synchronization document, to the second device, requesting the second device for update information regarding content objects of the second device designated as objects that are to be synchronized in the synchronization document, and updating the content objects of the first device designated as objects that are to be synchronized in the synchronization document, on the basis of the update information received from the second device as a response to the request.

For a better understanding of the invention, and to show how embodiments of the same may be carried into effect, reference will now be made, by way of example, to the accompanying diagrammatic drawings in which:
FIG. 1 is a view for explaining a conventional method of synchronizing devices that provide CDSs;
FIG. 2 is a concept view for schematically explaining a synchronization method according to an exemplary embodiment of the present invention;
FIG. 3 is a flowchart illustrating a process of allowing a device providing no content directory service to provide a synchronization document to another device which provides the CDS, according to an exemplary embodiment of the present invention;
FIG. 4 is a flowchart illustrating a synchronization process according to an exemplary embodiment of the present invention;
FIG. 5 is a block diagram of a synchronization apparatus according to an exemplary embodiment of the present invention; and
FIG. 6 illustrates a mapping table managed by the synchronization apparatus according to an exemplary embodiment of the present invention.

Hereinafter, exemplary embodiments of the present invention will be described in detail with reference to the appended drawings.

FIG. 2 is a concept view for schematically explaining a synchronization method according to an exemplary embodiment of the present invention. Referring to FIG. 2, a control point device 200 includes a control point module 211 for performing functions of a control point device, a storage unit 212 for storing content, and a synchronization module 213 for performing synchronization.

The control point device 200 cannot be easily synchronized with a CDS 220 of another party's device when the content storage unit 212 uses a different information format for managing a directory structure. This is because the control point device 200 cannot provide an action requested by the content directory service of the other party's device, and cannot substantially reflect update information acquired through the control point module 211 from the content directory service of the other party's device, in the content storage unit 212, due to this difference in the information format for managing a directory structure.

Without receiving a request from the other party's device, the synchronization module 213 converts information, which is required to allow the content directory service 220 of the other party's device to perform synchronization, into a format used by the content directory service 220. In particular, the synchronization module 213 maps information for managing a directory structure of local content to information in the format used by the content directory service 220, thereby allowing synchronization. A detailed description therefor will be given below.

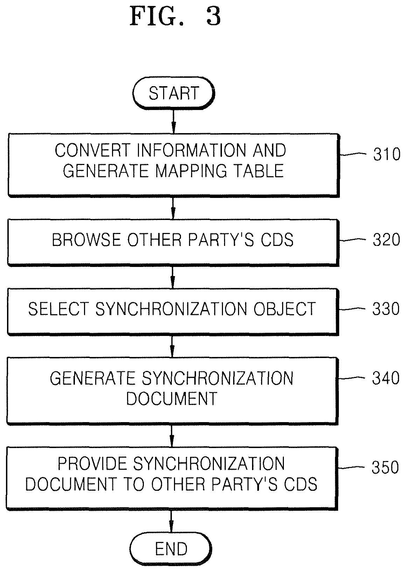

FIG. 3 is a flowchart illustrating a process of allowing a device which provides no content directory service to provide a synchronization document to another party's device which does provide a control directory service, according to an exemplary embodiment of the present invention. Hereinafter, a device which performs synchronization but provides no control directory service is referred to as a "control point device", and a device which is synchronized with the control point device and provides a control directory service is referred to as "the other party's device".

Referring to FIG. 3, in operation 310, a control point device converts information for content objects included in its local storage unit, into a format used to represent such content objects in a content directory service, for example, DIDL-Lite. Here, content objects mean components representing structured contents, such as files or directories, etc. Also, the control point device generates a mapping table which maps a path of local content to the information based on DIDL-Lite.

In operation 320, the control point device requests a content directory service of the other party's device for a browse action, and receives as a response a DIDL-Lite Extensible Markup Language (XML) document including metadata of content included in the other party's device.

In operation 330, the control point device selects content objects that are to be synchronized, according to a user's input. That is, the control point device determines which of the content objects to synchronize from among the content objects of the control point device and the content objects perceived by the DIDL-Lite XML document received from the other party's device.

In operation 340, if content objects that are to be synchronized are selected, a synchronization document is generated. The synchronization document includes information regarding which content object of the control point device and which content object of the other party's device must be synchronized, the type of synchronization policy, etc. The synchronization policy may be a rule regarding which objects are to be synchronized, according to the objects' content, for example, when content objects to be synchronized have different contents. Since the synchronization document is referred to by the other party's device during synchronization, the synchronization document is created in the DIDL-Lite format. Accordingly, since the synchronization document is created, the mapping table can be referred to.

In operation 350, the control point device provides the synchronization document to the other party's device. The operation 350 provides appropriate information to the content directory service of the other party's device, and sends an action request for creating the synchronization document. At this time, the synchronization document can be directly transmitted simultaneously with the action request, or a URI of the synchronization document can be provided.

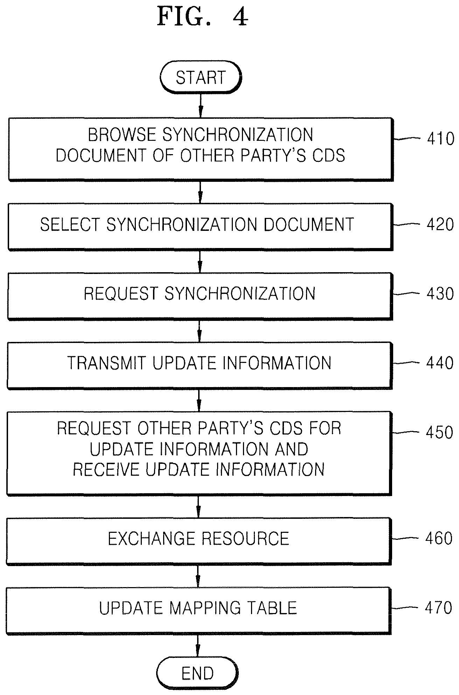

FIG. 4 is a flowchart illustrating a synchronization process according to an exemplary embodiment of the present invention. The process illustrated in FIG. 4 proceeds under the assumption that synchronization setup is complete according to the process illustrated in FIG. 3.

In operation 410, a control point device sends a request for a browse action on synchronization documents to a content directory service of the other party's device. The other party's device can include synchronization documents received from different control point devices, as well as the synchronization document according to the synchronization setup as illustrated in FIG. 3.

In operation 420, the control point device selects the synchronization document generated in the process illustrated in FIG. 3, from among synchronization documents indicated by a response message regarding the browse action, according to a user's input.

In operation 430, the control point device notifies the other party's device about an ID of the selected synchronization document, and requests synchronization based on the synchronization document. A process of requesting synchronization according to the synchronization document involves a process of calling an action provided by a content directory service. Generally, when a device providing content directory services requests such an action from the other party's device, the requesting device calls an action for requesting update information required for synchronization from a content directory service of the other party's device.

However, since the control point device according to an exemplary embodiment of the present invention provides no content directory service, the control point device cannot respond to such a call. Accordingly, in operation 430, preferably, a control message for requesting an action of a content directory service includes information indicating that a sending device provides no content directory service. Also, if the other party's device receives the control message including the information, the other party's device does not request that the control point device provide update information for a content object that is to be synchronized.

Accordingly, in operation 440, the control point device transmits update information indicating a change in the control point device's content objects that are designated as synchronization objects in the synchronization document, to the other party's device, without the other party's request.

Since an action for transmitting update information without the other party's request is not defined in the content directory service, it is preferable in operation 450 that the control point device includes its own update information in a message for requesting update information, which is to be transmitted to the other party's device.

Meanwhile, when synchronization is initially performed, the update information of the control point device can have a large size. In this case, it is possible for the control point device to transmit the update information itself, or to transmit a URI of a DIDL-Lite XML document indicating the update information. If the URI of the DIDL-Lite XML document is transmitted, the control point device must provide the DIDL-Lite XML document when the other party's device requests the document through the corresponding URI. Accordingly, the control point device must include a Hypertext Transfer Protocol (HTTP) server.

In operation 460, the control point device uploads and/or downloads a resource on the basis of update information received from the other party's device. The other party's device also can download a resource from the control point device, as necessary. In order to allow the other party's device to download the resource from the control point device, the control point device must have an HTTP server module for providing the resource. In the case where there is only a change in the metadata of content objects that are to be synchronized, without any change in the content objects themselves, operation 460 can be omitted.

In operation 470, if the control point device finds a change in its content objects while performing synchronization, the control point device updates the mapping table on the basis of the change.

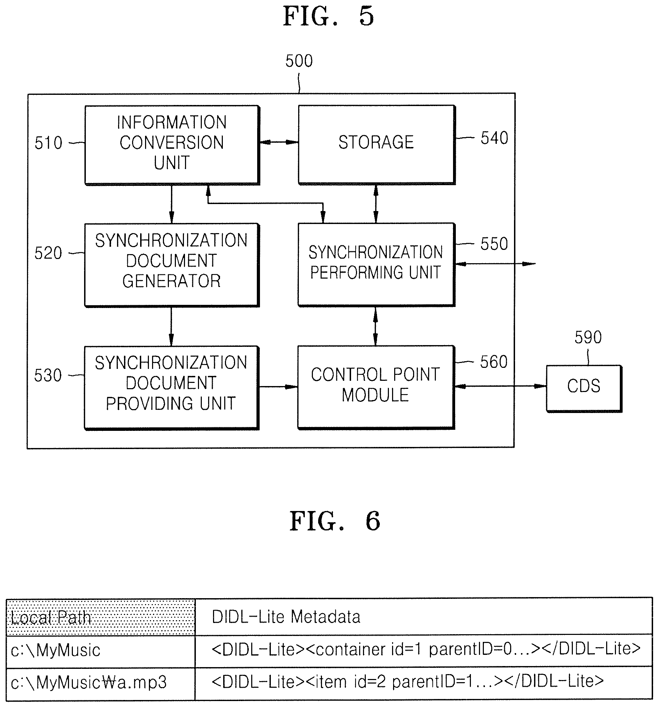

FIG. 5 is a block diagram of a synchronization apparatus 500 according to an exemplary embodiment of the present invention. As illustrated in FIG. 5, the synchronization apparatus includes an information conversion unit 510, a synchronization document generator 520, a synchronization document providing unit 530, a storage unit 540, a synchronization performing unit 550, and a control point (CP) module 560.

The information conversion unit 510 converts information regarding content objects into the DIDL-Lite format recognizable by a content directory service, with reference to local contents stored in the storage unit 540, and generates a mapping table. The mapping table can be stored in the storage unit 540, or in a memory in the information conversion unit 510.

The synchronization document generator 520 generates a synchronization document with reference to the mapping table, according to a user's input. That is, as described above, the synchronization document is generated in the DIDL-Lite format.

The synchronization document providing unit 530 transmits the synchronization document to the other party's device. Since transmitting the synchronization document to the other party's device involves a process of providing appropriate information to a content directory service 590 of the other party's device, and requesting from the other party's device an action for generating a synchronization document for the other party's device, the synchronization document providing unit 530 performs the process by using the CP module 560, which performs functions of a control point device.

The synchronization performing unit 550 sends a request to the content directory service 590 of the other party's device to perform synchronization according to the synchronization document provided by the synchronization document providing unit 530.

Also, the synchronization performing unit 550 sends a request to the content directory service 590 of the other party's device for update information, receives update information as a response to the request, from the content directory service 590, and uploads and/or downloads a resource on the basis of the update information. The synchronization performing unit 550 also updates the mapping table.

The update information of the control point device 500 is transmitted to the other party's device. At this time, as described above, the update information of the control point device 500 is preferably included in a message used for requesting update information of the content directory service 590 of the other party's device. It is possible to transmit either the update information or a URI indicating the location of the update information to the other party's device. As illustrated in FIG. 5, the synchronization performing unit 550 can include an HTTP server for responding to a request for the URI of the update information and for providing a resource for synchronization when the other party's device requests the resource.

The CP module 560, which performs functions of a control point device, calls an action of the content directory service 590 of the other party's device, and receives a response from the content directory service 590.

FIG. 6 illustrates the mapping table managed by the synchronization apparatus 500 according to an exemplary embodiment of the present invention.

Referring to FIGS. 5 and 6, the mapping table managed by the synchronization apparatus 500 according to the present invention maps a path of local content, that is, information recognizable by a control point device, to information with the DIDL-Lite format recognizable by the content directory service 590 of the other party's device. Accordingly, the control point device can generate a synchronization document and update information to provide to the other party's device, with reference to the mapping table. The control point device can therefore perform synchronization by reflecting update information received from the other party's device in its own local content.

Meanwhile, the invention can also be embodied as computer readable code on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices.

As described above, according to an embodiment of the present invention, a control point device which contains local content but cannot provide a content directory service, can be synchronized with a UPnP media server, without loading a separate protocol stack for synchronization.

While the present invention has been particularly shown and described with reference to exemplary embodiments thereof, it will be understood by those of ordinary skill in the art that various changes in form and details may be made therein without departing from the scope of the present invention as defined by the following claims.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A synchronization method for synchronizing a first device with a second device in an Universal Plug and Play (UPnP) network, the method comprising:
generating a synchronization document for synchronizing content directory services; and
providing the synchronization document to the second device,
wherein the first device provides no content directory service and the second device provides a content directory service.

2. The synchronization method of claim 1, further comprising:
requesting, from the second device, update information regarding the content objects of the second device to be synchronized;
updating content objects of the first device to be synchronized, based on the update information received from the second device in response to the requesting.

3. The synchronization method of claim 1 or 2, wherein the synchronization document comprises an identifier which specifies an object to be synchronized, from among the content objects of the first device and the second device, and information regarding a synchronization policy.

4. The synchronization method of claim 1, 2 or 3 wherein the predetermined format is Digital Item Description Language Lite (DIDL-Lite).

5. The synchronization method of any of claims 2-4, further comprising: transmitting an update information message regarding the content objects of the first device.
designated in the synchronization document as objects that are to be synchronized in the synchronization document, and the update information message comprising a message for requesting synchronization in accordance with the synchronization document, to the second device, wherein the message for requesting synchronization includes at least one of the update information of the first device, and information indicating a location from which the update information of the first device may be obtained by the second device.

6. The synchronization method of claim 5, wherein the information indicating a location comprises a Uniform Resource Identifier (URI).

7. The synchronization method of any of claims 2-6, transmitting an update information message regarding the content objects of the first device designated in the synchronization document as objects that are to be synchronized in the synchronization document, and the update information message comprising a message for requesting synchronization in accordance with the synchronization document, to the second device, wherein the message for requesting synchronization includes information indicating that the message for requesting synchronization is transmitted from a device providing no content directory service.

8. A computer-readable recording medium having embodied thereon a computer program intended to carry out steps when run on a computer the method steps of claim 1.

9. A synchronization apparatus for synchronizing a first device with a second device in an Universal Plug and Play (UPnP) network, the synchronization apparatus comprising:
a synchronization document generator which generates a synchronization document for synchronizing content directory services; and
a synchronization document providing unit which provides the synchronization document to the second device, wherein the first device provides no content directory service and the second device provides a content directory service.

10. The synchronization apparatus of claim 9, further comprising a synchronization performing unit which requests, from the second device, update information regarding the content objects of the second device to be synchronized; and
updates the content objects of the first device to be synchronized, based on the update information received from the second device in response to the request.

11. The synchronization apparatus of claim 9, wherein the synchronization document comprises an identifier which specifies an object to be synchronized, from among the content objects of the first device and the second device, and information regarding a synchronization policy.

12. The synchronization apparatus of claim 9, wherein the predetermined format is Digital Item Description Language Lite (DIDL-Lite).

13. The synchronization apparatus of claim 10, wherein the synchronization performing unit transmits an update information message regarding the content objects of the first device designated in the synchronization document as objects that are to be synchronized, the update information message comprising a message for requesting synchronization in accordance with the synchronization document, to the second device; wherein the message for requesting synchronization includes at least one of the update information of the first device, and information indicating a location from which the update information of the first device may be obtained by the second device.

14. The synchronization apparatus of claim 13, wherein the information indicating a location comprises a Uniform Resource Identifier (URI).

15. The synchronization apparatus of claim 10, wherein the synchronization performing unit transmits an update information message regarding the content objects of the first device designated in the synchronization document as objects that are to be synchronized, the update information message comprising a message for requesting synchronization in accordance with the synchronization document, to the second device,
and wherein the message for requesting synchronization and the request for update information include information indicating that the message for requesting synchronization is transmitted by a device providing no content directory service.

16. The synchronization method of claim 1, further comprising:
converting information, regarding content objects of the first device that are to be synchronized with the second device, into information with a predetermined format recognizable by the content directory service of the second device, wherein the synchronization document is generated based on the information with the predetermined format.

17. The synchronization apparatus of claim 9, further comprising:
an information conversion unit which converts information, regarding content objects of the first device that are to be synchronized with the second device, into information with a predetermined format recognizable by the content directory service,
wherein a synchronization document generator generates the synchronization document based on the information with the predetermined format.

## Patentansprüche

1. Verfahren zur Synchronisierung eines ersten Geräts mit einem zweiten Gerät in einem universellen Plug-and-Play-Netzwerk (UPnP-Netzwerk), wobei das Verfahren umfasst:
Erzeugen eines Synchronisierungsdokuments zur Synchronisierung von Inhaltsverzeichnisdiensten; und
zur Verfügung Stellen des Synchronisierungsdokuments an das zweite Gerät,
wobei das erste Gerät keinen Inhaltsverzeichnisdienst zur Verfügung stellt, und das zweite Gerät einen Inhaltsverzeichnisdienst zur Verfügung stellt.

2. Verfahren zur Synchronisierung gemäß Anspruch 1, das weiterhin umfasst:
Anfordern, bei dem zweiten Gerät, von Aktualisierungsinformationen in Bezug auf die Inhaltsobjekte des zweiten Geräts, die synchronisiert werden sollen;
Aktualisieren von zu synchronisierenden Inhaltsobjekten des ersten Geräts basierend auf den empfangenen, von dem zweiten Gerät stammenden Aktualisierungsinformationen als Reaktion auf die Anforderung.

3. Verfahren zur Synchronisierung gemäß Anspruch 1 oder 2, wobei das Synchronisierungsdokument eine Kennung, die ein zu synchronisierendes Objekt aus der Menge der Inhaltsobjekte des ersten Geräts und des zweiten Geräts spezifiziert, sowie Informationen über eine Synchronisierungsrichtlinie umfasst.

4. Verfahren zur Synchronisierung gemäß Anspruch 1, 2 oder 3, wobei es sich bei einem vorbestimmten Format um das so genannte "Digital Item Description Language Lite" (DIDL-Lite) handelt.

5. Verfahren zur Synchronisierung gemäß einem der Ansprüche 2 bis 4, wobei das Verfahren weiterhin umfasst:
Übertragen einer Mitteilung mit Aktualisierungsinformationen in Bezug auf die Inhaltsobjekte des ersten Geräts, die in dem Synchronisierungsdokument als in dem Synchronisierungsdokument zu synchronisierende Objekte ausgewiesen sind, an das zweite Gerät, und wobei die Mitteilung mit Aktualisierungsinformationen eine Mitteilung zur Anforderung der Synchronisierung in Übereinstimmung mit dem Synchronisierungsdokument umfasst, wobei die Mitteilung zur Anforderung der Synchronisierung umfasst: die Aktualisierungsinformationen des ersten Geräts und/oder Informationen, die auf einen Ort hinweisen, an dem die Aktualisierungsinformationen des ersten Geräts von dem zweiten Gerät erhalten werden können.

6. Synchronisierungverfahren gemäß Anspruch 5, wobei die Informationen, die auf einen Ort hinweisen, eine einheitliche Ressourcen-Kennung (URI, Uniform Resource Identifier) umfassen.

7. Verfahren zur Synchronisierung gemäß einem der Ansprüche 2 bis 6, umfassend das Übertragen einer Mitteilung mit Aktualisierungsinformationen in Bezug auf die Inhaltsobjekte des ersten Geräts, die in dem Synchronisierungsdokument als in dem Synchronisierungsdokument zu synchronisierende Objekte ausgewiesen sind, an das zweite Gerät, und wobei die Mitteilung mit Aktualisierungsinformationen eine Mitteilung zur Anforderung einer Synchronisierung in Übereinstimmung mit dem Synchronisierungsdokument umfasst, wobei die Mitteilung zur Anforderung der Synchronisierung Informationen umfasst, die darauf hinweisen, dass die Mitteilung zur Anforderung der Synchronisierung von einem Gerät übertragen worden ist, das keine Inhaltsverzeichnisdienste zur Verfügung stellt.

8. Computerlesbares Aufzeichnungsmedium, auf dem ein Computerprogramm gespeichert ist, das dazu bestimmt ist, wenn es auf einem Computer läuft, die Schritte des Verfahrens gemäß Anspruch 1 auszuführen.

9. Vorrichtung zur Synchronisierung eines ersten Geräts mit einem zweiten Gerät in einem universellen Plug-and-Play-Netzwerk (UPnP-Netzwerk), wobei die Vorrichtung umfasst:
eine Einrichtung zum Erzeugen eines Synchronisierungsdokuments, die ein Synchronisierungsdokument zur Synchronisierung von Inhaltsverzeichnisdiensten erzeugt; und
eine Einheit zum zur Verfügung Stellen des Synchronisierungsdokuments, die dem zweiten Gerät das Synchronisierungsdokument zur Verfügung stellt, wobei das erste Gerät keinen Inhaltsverzeichnisdienst zur Verfügung stellt, und das zweite Gerät einen Inhaltsverzeichnisdienst zur Verfügung stellt.

10. Vorrichtung zur Synchronisierung gemäß Anspruch 9, wobei die Vorrichtung weiterhin umfasst: eine Einheit zur Ausführung der Synchronisierung, die von dem zweiten Gerät Aktualisierungsinformationen in Bezug auf die zu synchronisierenden Inhaltsobjekte des zweiten Geräts anfordert; und
die die zu synchronisierenden Inhaltsobjekte des ersten Geräts basierend auf den empfangenen, von dem zweiten Gerät stammenden Aktualisierungsinformationen als Reaktion auf die Anforderung aktualisiert.

11. Vorrichtung zur Synchronisierung gemäß Anspruch 9, wobei das Synchronisierungsdokument eine Kennung, die ein zu synchronisierendes Objekt aus der Menge der Inhaltsobjekte des ersten Geräts und des zweiten Geräts spezifiziert, sowie Informationen über eine Synchronisierungsrichtlinie umfasst.

12. Vorrichtung zur Synchronisierung gemäß Anspruch 9, wobei es sich bei einem vorbestimmten Format um das so genannte "Digital Item Description Language Lite" (DIDL-Lite) handelt.

13. Vorrichtung zur Synchronisierung gemäß Anspruch 10, wobei die Einheit zur Ausführung der Synchronisierung eine Mitteilung mit Aktualisierungsinformationen in Bezug auf die Inhaltsobjekte des ersten Geräts, die in dem Synchronisierungsdokument als in dem Synchronisierungsdokument zu synchronisierende Objekte ausgewiesen sind, an das zweite Gerät überträgt, und wobei die Mitteilung mit Aktualisierungsinformationen eine Mitteilung zur Anforderung einer Synchronisierung in Übereinstimmung mit dem Synchronisierungsdokument umfasst; wobei die Mitteilung zur Anforderung der Synchronisierung umfasst: die Aktualisierungsinformationen des ersten Geräts und/oder Informationen, die auf einen Ort hinweisen, an dem die Aktualisierungsinformationen des ersten Geräts von dem zweiten Gerät erhalten werden können.

14. Vorrichtung zur Synchronisierung gemäß Anspruch 13, wobei die Informationen, die auf einen Ort hinweisen, eine einheitliche Ressourcen-Kennung (URI, Uniform Resource Identifier) umfassen.

15. Vorrichtung zur Synchronisierung gemäß Anspruch 10, wobei die Einheit zur Ausführung der Synchronisierung eine Mitteilung mit Aktualisierungsinformationen in Bezug auf die Inhaltsobjekte des ersten Geräts, die in dem Synchronisierungsdokument als in dem Synchronisierungsdokument zu synchronisierende Objekte ausgewiesen sind, an das zweite Gerät überträgt, und wobei die Mitteilung mit Aktualisierungsinformationen eine Mitteilung zur Anforderung einer Synchronisierung in Übereinstimmung mit dem Synchronisierungsdokument umfasst; und
wobei die Mitteilung zur Anforderung der Synchronisierung und die Anforderung von Aktualisierungsinformationen Informationen umfassen, die darauf hinweisen, dass die Mitteilung zur Anforderung der Synchronisierung von einem Gerät übertragen worden ist, das keine Inhaltsverzeichnisdienste zur Verfügung stellt.

16. Verfahren zur Synchronisierung gemäß Anspruch 1, wobei das Verfahren weiterhin umfasst:
Umwandeln von Informationen in Bezug auf mit dem zweiten Gerät zu synchronisierende Inhaltsobjekte des ersten Geräts in Informationen mit einem vorbestimmten Format, das von dem Inhaltsverzeichnisdienst des zweiten Geräts erkannt werden kann, wobei das Synchronisierungsdokument basierend auf den Informationen in dem vorbestimmten Format erzeugt wird.

17. Vorrichtung zur Synchronisierung gemäß Anspruch 9, wobei die Vorrichtung weiterhin umfasst:
eine Einheit zur Umwandlung von Informationen, die die Informationen in Bezug auf mit dem zweiten Gerät zu synchronisierende Inhaltsobjekte des ersten Geräts in Informationen mit einem vorbestimmten Format, das von dem Inhaltsverzeichnisdienst des zweiten Geräts erkannt werden kann, umwandelt, wobei eine Vorrichtung zur Erzeugung des Synchronisierungsdokuments das Synchronisierungsdokument basierend auf den Informationen mit dem vorbestimmten Format erzeugt.

## Revendications

1. Procédé de synchronisation permettant de synchroniser un premier appareil avec un second appareil dans un réseau UPnP (Universal Plug and Play), le procédé comprenant:
la production d'un document de synchronisation pour synchroniser des services de répertoire de contenu; et
la communication du document de synchronisation au second appareil,
dans lequel le premier appareil ne fournit aucun service de répertoire de contenu et le second appareil fournit un service de répertoire de contenu.

2. Procédé de synchronisation selon la revendication 1, comprenant en outre:
la demande, auprès du second appareil, d'informations de mise à jour concernant les objets de contenu du second appareil qui doivent être synchronisés;
la mise à jour des objets de contenu du premier appareil qui doivent être synchronisés, en fonction des informations de mise à jour reçues en provenance du second appareil suite à la demande.

3. Procédé de synchronisation selon la revendication 1 ou 2, dans lequel le document de synchronisation comprend un identificateur précisant l'objet à synchroniser parmi les objets de contenu du premier appareil et du second appareil, et des informations concernant une politique de synchronisation.

4. Procédé de synchronisation selon la revendication 1, 2 ou 3 dans lequel le format prédéterminé est DIDL-Lite (Digital Item Description Language Lite).

5. Procédé de synchronisation selon l'une quelconque des revendications 2 à 4, comprenant en outre:
l'émission d'un message à informations de mise à jour concernant les objets de contenu du premier appareil, désignés dans le document de synchronisation comme objets à synchroniser dans le document de synchronisation, et le message à informations de mise à jour comprenant un message de demande de synchronisation conformément au document de synchronisation, auprès du second appareil, ledit message de demande de synchronisation comportant lesdites informations de mise à jour du premier appareil et/ou des informations indicatrices d'un emplacement auprès duquel les informations de mise à jour du premier appareil peuvent être obtenues par le second appareil.

6. Procédé de synchronisation selon la revendication 5, dans lequel les informations indicatrices d'un emplacement comprennent un Identificateur de ressource uniforme (URI; Uniform Resource Identifier).

7. Procédé de synchronisation selon l'une quelconque des revendications 2 à 6, comprenant l'émission d'un message à informations de mise à jour concernant les objets de contenu du premier appareil désignés dans le document de synchronisation comme objets à synchroniser dans le document de synchronisation, et le message à informations de mise à jour comprenant un message de demande de synchronisation conformément au document de synchronisation, auprès du second appareil, ledit message de demande de synchronisation comportant des informations indiquant que le message de demande de synchronisation a été émis par un appareil n'assurant aucun service de répertoire de contenu.

8. Support d'enregistrement lisible par ordinateur, contenant un programme informatique conçu pour réaliser les étapes du procédé selon la revendication 1 lorsqu'il est exécuté par un ordinateur.

9. Dispositif de synchronisation permettant de synchroniser un premier appareil avec un second appareil dans un réseau UPnP (Universal Plug and Play), le dispositif de synchronisation comprenant:
un générateur de document de synchronisation qui produit un document de synchronisation pour synchroniser des services de répertoire de contenu; et
une unité de communication de document de synchronisation qui fournit le document de synchronisation auprès du second appareil, le premier appareil ne fournissant aucun service de répertoire de contenu et le second appareil fournissant un service de répertoire de contenu.

10. Dispositif de synchronisation selon la revendication 9, comprenant en outre une unité de réalisation de synchronisation qui demande, auprès du second appareil, des informations de mise à jour concernant les objets de contenu du second appareil qui doivent être synchronisés, et
qui met à jour les objets de contenu du premier appareil qui doivent être synchronisés, en fonction des informations de mise à jour reçues en provenance du second appareil suite à la demande.

11. Dispositif de synchronisation selon la revendication 9, dans lequel le document de synchronisation comprend un identificateur précisant l'objet à synchroniser, parmi les objets de contenu du premier appareil et du second appareil, et des informations concernant une politique de synchronisation.

12. Dispositif de synchronisation selon la revendication 9, dans lequel le format prédéterminé est DIDL-Lite (Digital Item Description Language Lite).

13. Dispositif de synchronisation selon la revendication 10, dans lequel l'unité de réalisation de synchronisation émet un message à informations de mise à jour concernant les objets de contenu du premier appareil désignés dans le document de synchronisation comme objets à synchroniser, le message à informations de mise à jour comprenant un message de demande de synchronisation conformément au document de synchronisation, auprès du second appareil; ledit message de demande de synchronisation comportant lesdites informations de mise à jour du premier appareil et/ou des informations indicatrices d'un emplacement auprès duquel les informations de mise à jour du premier appareil peuvent être obtenues par le second appareil.

14. Dispositif de synchronisation selon la revendication 13, dans lequel les informations indicatrices d'un emplacement comprennent un Identificateur de ressource uniforme (URI; Uniform Resource Identifier).

15. Dispositif de synchronisation selon la revendication 10, dans lequel l'unité de réalisation de synchronisation émet un message à informations de mise à jour concernant les objets de contenu du premier appareil désignés dans le document de synchronisation comme objets à synchroniser, le message à informations de mise à jour comprenant un message de demande de synchronisation conformément au document de synchronisation, auprès du second appareil, et
ledit message de demande de synchronisation et la demande d'informations de mise à jour comprennent des informations indiquant que le message de demande de synchronisation a été émis par un appareil n'assurant aucun service de répertoire de contenu.

16. Procédé de synchronisation selon la revendication 1, comprenant en outre:
la transformation des informations, concernant les objets de contenu du premier appareil qui doivent être synchronisés avec le second appareil, en des informations présentant un format prédéterminé reconnaissable par le service de répertoire de contenu du second appareil, le document de synchronisation étant produit en fonction des informations présentant le format prédéterminé.

17. Dispositif de synchronisation selon la revendication 9, comprenant en outre:
une unité de transformation d'informations qui transforme les informations, concernant les objets de contenu du premier appareil qui doivent être synchronisés avec le second appareil, en des informations présentant un format prédéterminé reconnaissable par le service de répertoire de contenu, un générateur de document de synchronisation produisant le document de synchronisation en fonction des informations présentant le format prédéterminé.
